# EUROPEAN PATENT SPECIFICATION

(11) **EP 1 994 830 B1**
(45) Date of publication and mention of the grant of the patent: **13.06.2012**
(21) Application number: 07108534.4
(22) Date of filing: 21.05.2007
(51) Int. Cl.: A22C 29/00, A01K 61/00, B23K 26/00

(54) **Method for identifying shellfish**
Verfahren zur Identifikation von Schalentieren
Procédé d'identification de mollusques et crustacés

(43) Date of publication of application: 26.11.2008
(73) Proprietor: Universidad de Vigo, 36280 Vigo (ES)
(72) Inventor: Pou Saracho, Juan María Dpto. Fisica Aplicada, 36280 Vigo (ES); Lusquinos Rodriguez, Fernando Dpto. Fisica Aplicada, 36280 Vigo (ES); Quintero Martinez, Félix Dpto. Fisica Aplicada, 36280 Vigo (ES); Perez-Martinez Y Perez-Amor, Mariano J. Dpto. Fisica Aplicada, 36280 Vigo (ES)
(74) Representative: ABG Patentes, S.L.

(56) References cited:
- WO-A-03/015508
- DE-A1- 4 439 714
- GB-A- 2 296 788
- US-A- 3 701 880
- US-A- 4 133 294

## Description

### OBJECT AND FIELD OF THE INVENTION

The present invention relates to a method for identifying shellfish by means of applying laser radiation.

It is possible to identify crustaceans, mollusks or any other animal provided with a carapace, shell or outer skeleton (exoskeleton) by means of the method object of the invention. A logotype or trademark, a capture date, expiry date or any other legend can thus be marked. It is also possible to mark bar or data codes in 2 dimensions without the animal suffering any damage and in a clean, simple and very quick manner.

### BACKGROUND OF THE INVENTION

Shellfish identification is an increasingly pressing need. The high value that some species reach in markets and restaurants has made it necessary to identify the origin and quality of each piece. It is necessary to provide an identification which on one hand allows preventing poaching and on the other hand allows preventing intrusion (preventing the introduction in markets of individuals of origins other than the usual ones) and fraud (preventing the sale of individuals of other origins mixed with individuals from prestigious areas) with the subsequent loss of credibility by the consumer and the decrease of the final quality of the products. It is necessary to provide a quality mark to specific products such as for example shellfish from Galician estuaries or American lobster.

Several methods for marking shellfish have been attempted to date with very different results. Labels made of different plastic materials have first been used, which labels are adhered to the shell or carapace of the animal by means of suitable adhesives or joined to the animal by means of any type of polymeric staple. This technique has the following drawbacks:
- The labels can only be joined by plastic staples to large species such as lobsters, spider crabs, etc ....
- The fixing method by plastic staples is not viable for mollusks, except in scallops in which an "ear" thereof is drilled so as to staple the plastic label therein. An additional shell drilling operation is therefore needed before stapling the label.

- An (epoxy type) adhesive is required to fix the label to the mollusk shell.
- The cost of the label plus the staple or the adhesive can exceed the cost of the animal itself.
- It is generally a slow method.

Another technique which has been explored is the use of self-adhesive labels or stickers similar to those used for identifying pieces of fruit. In this case, the cost is not a great problem and different models can be designed to be adhered to the carapace or shell of the animal. These labels are generally waterproof and cold-resistant (they can be subjected to a freezing process). However, these waterproof self-adhesive labels or stickers only adhere to the surface of the animal when it is dry *(See the report "*Waterproof labelling and identification systems suitable for shellfish and other seafood and aquaculture products", NSW fisheries, 1999, Henley, Australia*).* This is great drawback given that the crustaceans and mollusks are generally preserved in contact with ice and their body is maintained wet.

The use of direct marks by ink printing has been investigated as an alternative. The main drawbacks are the following:
- The use of an ink is required. In spite of being innocuous for human health, such ink involves an additive to a product which is supposed to be fresh and free of any type of preservatives and chemical products.
- The marks by ink printing have to be carried out on the clean and dry surface of the shell or carapace of the animal.
- The legibility of the marks depends on the surface roughness. For example: it is impossible to carry out a legible mark by ink printing on the extremely rough carapace of a spider crab.

US4133294 discloses a process for marking permanently the shells of mollusks, in particular certain bivalve mollusks, which marking will fluoresce when exposed to ultra-violet light, the process comprising feeding said mollusks with a food medium containing tetracycline during the growing stage of the mollusks.

A possible alternative to the previously described methods is the use of laser as a marking tool. Laser material marking is a field that started about three decades ago and has been very focused on metal materials and plastics *(see the following works by way of example:* M. Bass, "Laser materials processing", North-Holland, Amsterdam (1983*);* O.D.D. Soares and M. Pérez-Amor, "Applied laser tooling", Martinus Nijhoff, Dordrecht (1987*)*; W.M. Steen, "Laser material processing", Springer-Verlag, London (1991*))*. On the contrary, the present invention sets forth a laser application for marking shellfish such as crustaceans and mollusks.

DE4439714 discloses a process for marking products during their manufacture by means of laser radiation, which is applied to a predetermined surface region of the product according to an electronically stored marking program. Before and/or during a part of marking which is not material-specific, plasma is generated by evaporation of the product material. The spectrum of this plasma is analysed to determine the material-specific parameters to which the marking program is to be adjusted.

GB2296788A discloses a method in which an image recorded digitally in a computer is used to control the relative movements of a solid surface, particularly stone, and a tool which produces indentations in the surface, so that the image is reproduced on the surface in the form of a large number of laterally spaced indentations.

US3701880 discloses a method for sculpturing an indicia or decorative design in the surface of an article, such as a glass envelope for an electric lamp or the like, by subjecting the article to a laser or an electron beam and varying the position of the article relative to the beam at a speed and in a manner such that the beam scans the article and removes preselected surface portions thereof either by vaporization or by thermally-induced fracturing and spalling.

### DESCRIPTION OF THE INVENTION

The objectives of the invention are achieved by means of a method according to claim 1. The particular embodiments of the method object of the invention are defined in dependent claims 2 to 11.

The present invention sets forth a laser application for marking shellfish such as crustaceans and mollusks having an outer carapace or shell. Therefore, the present invention provides a method for marking shellfish comprising the following operating steps:
a) Placing the animal to be identified on a suitable support for its dimensions, in a fixed system or in a moving system connected to any position control equipment,
b) Focusing at least one laser beam by means of a suitable focusing system on the surface of the shell or of the carapace of the animal to be identified,
c) Ablation, surface fusion or decolorization of the area irradiated by the laser beam,
d) Relative movement between the laser beam and the animal to be identified, to form a mark on the surface of the shell or of the carapace of the animal to be identified.

More specifically, the shellfish identification method object of the present patent consists of marking on the carapace or on the shell of the animal a legend, logotype, expiry date, capture date, bar code, matrix identification code or any other type of mark which can be used as an identification for said animal. This mark is obtained upon subjecting the shell or the carapace of the animal to the action of the radiation from a focused laser source by means of a suitable focusing system and forming a relative movement between said beam and the animal.

The marks can be obtained by different mechanisms: by ablation of the interaction area between the laser beam and the carapace or the shell, by surface fusion of said interaction area or by simple decolorization thereof. The mechanism depends on the energy density applied and on the type of animal.

One of the main problems considered while identifying shellfish is the roughness of the carapaces and of the shells. The invention set forth uses a laser beam focused by means of a lens with a focal length that is sufficiently large for the depth of focus to allow solving the roughness problem. It is thus possible to mark very rough surfaces such as the carapace of a lobster, spider crab or the shell of a scallop.

Another drawback of several alternative shellfish identification techniques is the need to dry the shell or the carapace in the area in which the label is to be fixed or in which ink printing is to be carried out. In the present invention, it is not necessary to dry the surface to be marked because it is a contact-free method. The laser beam is focused on the surface of the shell or of the carapace and can generate the mark on the wet surface, even in the presence of frost (which is usual if the shellfish is preserved chilled).

Additives or inks reacting to the laser beam irradiation are not required in the present invention. The mark is directly carried out on the surface of the shell or of the carapace by ablation, surface fusion or surface decolorization.

In addition, the speed at which it is carried out makes the heat load on the animal be very low. It is thus possible to mark frozen shellfish without the identification method involving the thawing of any part of the animal.

The main advantages of the present invention are the following:
- A permanent indelible mark is obtained directly on the surface of the shell or of the carapace of the animal to be identified.
- It is a contact-free method.
- Direct identification on the surface of very rough shells or carapaces such as scallops or spider crabs is possible.
- Identification on fresh, cooked, baked, microwave-cooked animals, etc... is possible.
- Identification of frozen animals is possible.
- Identification of animals with a wet shell or carapace is possible.
- The marks carried out by means of the method of the present patent are resistant to cooking, freezing, washing, oven baking and grilling processes, etc .....

In addition, unlike the conventional methods, the laser beam can be easily moved, which makes this identification method by laser marking have broad automation and integration possibilities in shellfish processing and handling plants.

### BRIEF DESCRIPTION OF THE DRAWINGS

To complement the description which is being made and with the aim of aiding to better understand the features of the invention, according to an example of a preferred practical embodiment thereof, a single figure is attached as an integral part of said description, in which a system for marking shellfish according to the method of the present invention is schematically shown with an illustrative and non-limiting character.

### PREFERRED EMBODIMENT OF THE INVENTION

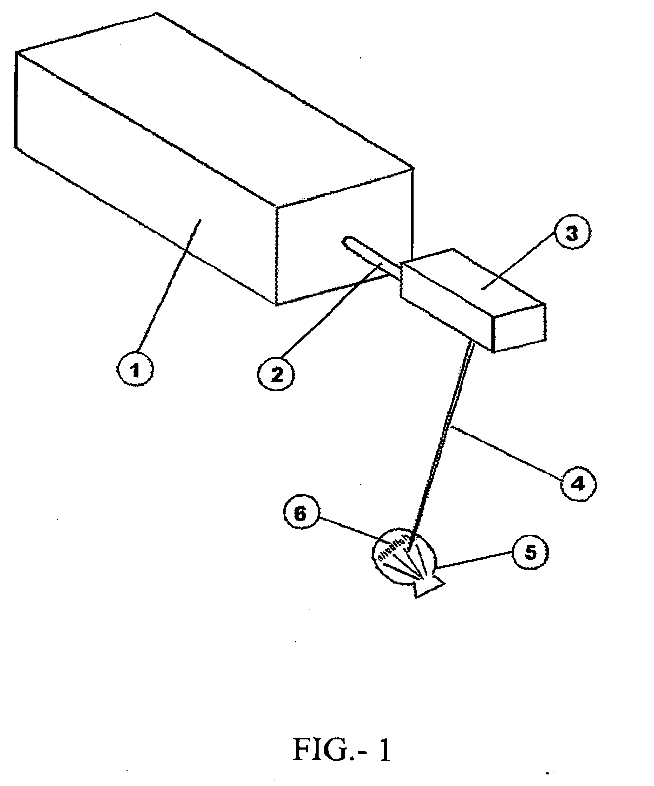

The method for identifying shellfish object of the present invention is carried out in a suitable system, an example of which is shown in Figure 1. This method basically consists of the following: the radiation from a laser source (1) is led by means of a suitable beam guiding system (2), which can be a mirror system or an optical fiber, depending on the type of laser source (1) used, to a beam focusing and directing system (3). The animal (5) to be identified is placed on a suitable support for its dimensions. Said support can in turn be placed on a fixed table or base or on a moving system. In this case, said system can consist of any type of robot, of any type of coordinate table or of a combination of both systems. This system will be connected to an automatic position control system for controlling the position of the animal, which system is not shown in the figure because it is commonly used in industrial equipment.

A relative movement needs to be formed between the focused laser beam (4) and the animal (5) to be identified to obtain the marks (6) on the surface of the shell or carapace of the animal (5) to be identified. This relative movement can be obtained by moving the animal (5) to be identified, by moving the focused laser beam (4) or by moving both. However, the best results have been obtained by moving the focused laser beam (4) by means of a beam focusing and directing system (3). In this system, the radiation from the laser source (1) is focused by means of a lens or group of lenses, or by means of a mirror or group of mirrors. In a particular embodiment, the focusing system consists of a pair of mirrors, one of which is planar and the other is parabolic. In another particular embodiment, the focusing system consists of a simple lens, a dual-focus lens or a group of lenses.

It is important to use a system with a large focal length so that the focused laser beam (4) has a high depth of focus. It will thus be possible to obtain marks (6) on very rough surfaces of the animal (5) to be identified. This focal length must be greater than 80 mm. Good results have been obtained with focal lengths between 120 and 400 mm.

The marks (6) can also be obtained by scanning the focused beam (4) on the surface of the animal (5) to be identified while the latter also moves, for example on a moving surface, conveyor belt, robot, coordinate table or any combination of two or more of these systems.

To carry out the desired marks (6), the beam focusing and directing system (3) is connected to a control system (computer, numerical control system or the like) which is not included in the figure because it is commonly used in industrial systems. The focused beam (4) thus describes the movements corresponding to the mark (6) which has been set in said control system on the surface of the shell or of the carapace of the animal (5) to be identified.

The laser radiation can come from a laser source (1) of any wavelength, such as for example a CO₂, CO, N₂, Nd:YAG, Er:YAG, Nd:glass, Yb:YAG, Ruby, HeNe, HeCd, HeHg, Cu, I, Ar, Kr laser, a laser diode, a fiber laser, a disk laser, a chemical laser, an excimer laser, an alexandrite laser, an emerald laser or a dye laser. In any case, the best results have been obtained using CO₂, Nd:YAG or fiber lasers. The power necessary for this type of lasers can be between 10 and 600 W, the best results having been obtained when working at a power between 15 and 300 W.

When the size of the marks (6) is large, two or more laser sources (1) can be used in a synchronized manner to complete the marks (6) in a reduced time period.

A variant of the present invention is to use several laser sources (1) in a synchronized manner such that the marks (6) on the animal (5) to be identified are the result of a matrix marking, each laser source marking a dot or a limited group of dots. The combination of such dots thus gives rise to the desired mark (6).

The following is a practical example for identifying shellfish: a spider crab has been identified by means of a mark on its carapace using to that end a CO₂ laser (λ=10,6 µm) working continuously, without an auxiliary gas and with a power of 25 W. In these conditions, perfectly legible and indelible marks of an excellent quality were obtained without affecting the animal. A mark with the legend "Galicia calidade" was marked at a speed of 1500 mm/s.

Having sufficiently described the nature of the present invention, as well as a way of putting it into practice, it must only be added that it is possible to introduce changes of shape, materials and arrangement in it as a whole or in the parts forming it, provided that said alterations do not substantially vary said invention.

## Claims

1. A method for identifying shellfish, **characterized in that** it comprises the following operating steps:
a) Placing the animal (5) to be identified on a suitable support for its dimensions, in a fixed system or in a moving system connected to any position control equipment,
b) Focusing at least one laser beam (4) by means of a suitable focusing system (3) on the surface of the shell or of the carapace of the animal (5) to be identified,
c) Ablation, surface fusion or decolorization of the area irradiated by the laser beam (4),
d) Relative movement between the laser beam (4) and the animal (5) to be identified, to form a mark (6) on the surface of the shell or of the carapace of the animal (5) to be identified.

2. A method according to claim 1, in which the animal (5) to be identified has a carapace, shell or outer skeleton.

3. A method according to any of claims 1 to 2, in which the power supplied by the laser beam (4) is comprised between 10 and 600 W, preferably between 15 and 300 W.

4. A method according to any of claims 1 to 3, in which the focusing system (3) consists of a pair of mirrors, one of which is planar and the other parabolic.

5. A method according to any of claims 1 to 4, in which the focusing system (3) consists of a simple lens, a dual-focus lens or a group of lenses.

6. A method according to any of claims 1 to 5, in which the focusing system (3) has a focal length greater than 80 mm, preferably between 120 and 400 mm.

7. A method according to any of claims 1 to 6, in which the moving system connected to any position control equipment for controlling the position of the piece consists of any type of robot, of any type of coordinate table, of a conveyor belt, of a moving table or of a combination of two or more of these systems.

8. A method according to any of claims 1 to 7, in which at least two laser sources (1) are used in a synchronized manner to obtain the mark on the animal to be identified (5).

9. A method according to any of claims 1 to 8, in which the laser beam (3) comes from a laser (1) of any wavelength, power, frequency or beam quality, such as for example a CO₂, CO, N₂, Nd:YAG, Er:YAG, Nd:glass, Yb:YAG, Ruby, HeNe, HeCd, HeHg, Cu, I, Ar, Kr laser, a laser diode, a fiber laser, a disk laser, a chemical laser, an excimer laser, an alexandrite laser, an emerald laser or a dye laser, or any other type of laser.

10. A method according to any of claims 1 to 9, in which the mark (6) formed on the animal (5) to be identified is any legend, a logotype, any date, a bar code, a two-dimensional matrix code or a combination of two or more of these marks.

11. A method according to claim 8 in which the mark (6) on the animal (5) to be identified is the result of a matrix marking, each laser source (1) marking a dot or a limited group of dots, such that the combination of said dots gives rise to the desired mark (6).

## Patentansprüche

1. Verfahren zur Identifizierung von Schalentieren, umfassend die folgenden Verfahrensschritte:
a) Legen des zu identifizierenden Tieres (5) auf einen für dessen Dimensionen geeigneten Träger, in einem fixierten System oder in einem beweglichen System, das mit einer beliebigen Positionskontrollvorrichtung verbunden ist,
b) Fokussieren von wenigstens einem Laserstrahl (4) mittels eines geeigneten Fokussierungssystems (3) auf die Oberfläche der Schale oder des Carapax des zu identifizierenden Tieres (5),
c) Ablation, Oberflächenfusion oder Entfärbung der von dem Laserstrahl (4) bestrahlten Fläche,
d) relative Bewegung zwischen dem Laserstrahl (4) und dem zu identifizierenden Tier (5) zur Erzeugung einer Markierung (6) auf der Oberfläche der Schale oder des Carapax des zu identifizierenden Tieres (5).

2. Verfahren nach Anspruch 1, wobei das zu identifizierende Tier (5) einen Carapax, eine Schale oder ein Außenskelett aufweist.

3. Verfahren nach einem der Ansprüche 1 bis 2, wobei die von dem Laserstrahl (4) gelieferte Leistung 10 W bis 600 W beträgt, vorzugsweise 15 W bis 300 W.

4. Verfahren nach einem der Ansprüche 1 bis 3, wobei das Fokussierungssystem (3) aus einem Paar von Spiegeln besteht, von denen einer planar und der andere parabolisch ist.

5. Verfahren nach einem der Ansprüche 1 bis 4, wobei das Fokussierungssystem (3) aus einer einfachen Linse, einer Dual-Focus-Linse oder einer Gruppe von Linsen besteht.

6. Verfahren nach einem der Ansprüche 1 bis 5, wobei das Fokussierungssystem (3) eine Brennweite von mehr als 80 mm aufweist, vorzugsweise 120 bis 400 mm.

7. Verfahren nach einem der Ansprüche 1 bis 6, wobei das bewegliche System, das mit einer beliebigen Positionskontrollvorrichtung zur Kontrolle der Position des Teils verbunden ist, aus einer beliebigen Art von Roboter, aus einer beliebigen Art von Kreuztisch, aus einem Fließband, aus einem beweglichen Tisch oder aus einer Kombination von zwei oder mehr dieser Systeme besteht.

8. Verfahren nach einem der Ansprüche 1 bis 7, wobei wenigstens zwei Laserquellen (1) auf eine synchronisierte Weise verwendet werden, um eine Markierung auf dem zu identifizierenden Tier (5) zu erhalten.

9. Verfahren nach einem der Ansprüche 1 bis 8, wobei der Laserstrahl (3) von einem Laser (1) einer beliebigen Wellenlänge, Leistung, Frequenz oder Strahlqualität kommt, wie beispielsweise einem CO₂-Laser, einem CO-Laser, einer N₂-Laser, einem Nd:YAG-Laser, einem Er:YAG-Laser, einem Nd:Glas-Laser, einem Yb:YAG-Laser, einem Rubin-Laser, einem HeNe-Laser, einem HeCd-Laser, einem HeHg-Laser, einem Cu-Laser, einem I-Laser, einem Ar-Laser, einem Kr-Laser, einer Laserdiode, einem Faser-Laser, einem Scheiben-Laser, einem chemischen Laser, einem Excimer-Laser, einem Alexandrit-Laser, einem Smaragd-Laser, oder einem Farbstoff-Laser,oder einer beliebigen anderen Art von Laser.

10. Verfahren nach einem der Ansprüche 1 bis 9, wobei die auf dem zu identifizierenden Tier (5) gebildete Markierung (6) eine beliebige Legende, ein Logo, eine beliebiges Datum, ein Barcode, ein zweidimensionaler Matrixcode oder eine Kombination aus zwei oder mehr dieser Markierungen ist.

11. Verfahren nach Anspruch 8, wobei die Markierung (6) auf dem zu identifizierenden Tier (5) das Resultat einer Matrixmarkierung darstellt, wobei jede Laserquelle (1) einen Punkt oder eine begrenzte Gruppe von Punkten markiert, so dass die Kombination der Punkte die gewünschte Markierung (6) ergibt.

## Revendications

1. Méthode d'identification des coquillages, **caractérisée en ce qu'**elle comprend les étapes fonctionnelles suivantes :
a) placer l'animal (5) à identifier sur un support approprié par ses dimensions, dans un système fixe ou dans un système mobile connecté à tout équipement de contrôle de la position,
b) concentrer au moins un rayon laser (4) au moyen d'un système de concentration approprié (3) sur la surface de la coquille ou de la carapace de l'animal (5) à identifier,
c) ablation, fusion de la surface ou décoloration dans la zone irradiée par le rayon laser (4),
d) mouvement relatif entre le rayon laser (4) et l'animal (5) à identifier, pour former une marque (6) à la surface de la coquille ou de la carapace de l'animal (5) à identifier.

2. Méthode selon la revendication 1, **caractérisée en ce que** l'animal (5) à identifier possède une carapace, une coquille ou un exosquelette.

3. Méthode selon l'une quelconque des revendications 1 à 2, **caractérisée en ce que** l'énergie apportée par le rayon laser (4) est comprise entre 10 et 600 W, de préférence entre 15 et 300 W.

4. Méthode selon l'une quelconque des revendications 1 à 3, **caractérisée en ce que** le système de concentration (3) consiste en une paire de miroirs dont l'un est planaire et l'autre parabolique.

5. Méthode selon l'une quelconque des revendications 1 à 4, **caractérisée en ce que** le système de concentration (3) consiste en une lentille simple, une lentille à double foyer ou un groupe de lentilles.

6. Méthode selon l'une quelconque des revendications 1 à 5, **caractérisée en ce que** le système de concentration (3) a une longueur focale supérieure à 80 mm, de préférence entre 120 et 400 mm.

7. Méthode selon l'une quelconque des revendications 1 à 6, **caractérisée en ce que** le système mobile connecté à tout équipement de contrôle de la position pour contrôler la position de la pièce consiste en tout type de robot, tout type de tableau de coordonnées, de tapis roulant, de tableau mobile ou une combinaison de deux ou plusieurs de ces systèmes.

8. Méthode selon l'une quelconque des revendications 1 à 7, **caractérisée en ce qu'**au moins deux sources lasers (1) sont utilisées de façon synchronisée pour obtenir le marquage sur l'animal à identifier (5).

9. Méthode selon l'une quelconque des revendications 1 à 8, **caractérisée en ce que** le rayon laser (3) provient d'un laser (1) de n'importe quelle longueur d'onde, puissance, fréquence ou qualité du rayon, comme par exemple un laser à CO₂, CO, N₂, Nd :YAG, Er : YAG, Nd : verre, Yb :YAG, Rubis, HeNe, HeCd, HeHg, Cu, I, Ar, Kr, une diode laser, une fibre laser, un disque laser, un laser chimique, un laser à excimère, un laser à alexandrite, un laser à émeraude ou un laser à colorant, ou tout autre type de laser.

10. Méthode selon l'une quelconque des revendications 1 à 9, **caractérisée en ce que** la marque (6) formée sur l'animal (5) à identifier est toute légende, un logotype, toute date, un code barre, un code à matrice à deux dimensions ou une combinaison de deux ou plusieurs de ces marques.

11. Méthode selon la revendication 8, **caractérisée en ce que** la marque (6) sur l'animal (5) à identifier est la résultat d'un marquage de matrice, chaque source laser (1) marquant un point ou un groupe limité de points, de façon à ce que la combinaison desdits points donne naissance à la marque désirée (6).
